# EUROPEAN PATENT APPLICATION

(11) **EP 2 434 126 A2**
(43) Date of publication of application: **28.03.2012**
(21) Application number: 11182426.4
(22) Date of filing: 22.09.2011
(51) Int. Cl.: F02C 6/12, F01D 5/06

(54) **Shaft and turbine wheel assembly for a turbocharger**

(30) Priority: 27.09.2010 US 891574
(71) Applicant: Honeywell International Inc., Morristown, NJ 07962-2245 (US)
(72) Inventor: Vazeille, Nicolas, Morristown, NJ 07962-2245 (US); Genin, Emeric, Morristown, NJ 07962-2245 (US); Davies, Peter, Morristown, NJ 07962-2245 (US)
(74) Representative: Buckley, Guy Julian

(57) **Abstract**

An assembly (600) for a turbocharger (200) includes a shaft (620) with an axial extension and a shaft-side groove portion, the shaft-side groove portion defined at least in part by a radial height; a turbine wheel (660) with a counter bore and a turbine wheel-side groove portion, the turbine wheel-side groove portion defined at least in part by a radial height; and, upon receipt of the axial extension of the shaft by the counter bore of the turbine wheel, a groove formed by the shaft-side groove portion and the turbine wheel-side groove portion, the groove configured to seat a seal component. Various other examples of devices, assemblies, systems, methods, etc., are also disclosed.

## Description

### TECHNICAL FIELD

Subject matter disclosed herein relates generally to turbomachinery for internal combustion engines and, in particular, to shaft and turbine wheel assemblies.

### BACKGROUND

Most conventional turbochargers include a shaft fixed to a turbine wheel, which is often referred to as a shaft and turbine wheel assembly (SWA). During assembly of a turbocharger, the shaft of a SWA is usually inserted through a bearing bore of a center housing such that the free end of the shaft can be fitted with a compressor wheel.

As operational environments of a compressor wheel, a shaft and a turbine wheel differ, materials of construction and manners of construction of these components can also differ. For example, exhaust temperatures may exceed 500 C for a diesel engine and 1000 C for a gasoline engine thereby requiring high-temperature materials for turbine wheel construction. Further, while a shaft may be made of a moderate temperature resistant metal or metal alloy turned on a lathe, a turbine wheel is typically cast using a high-temperature resistant ceramic, metal or metal alloy (e.g., consider austenitic nickel-chromium-based superalloys marketed under the brand INCONEL®, Special Metals Corporation, Huntington West Virginia).

Various techniques can be used to join a shaft to a turbine wheel. One technique is electron beam welding, which involves placing a shaft and turbine wheel in a vacuum and focusing an electron beam on a joint to be welded. Another energy beam-based technique involves one or more laser beams to deliver energy sufficient to weld components together. Other techniques include, for example, friction welding where one component is rotated and contacted with another component to generate heat that causes melting of material. In general, it is beneficial for a weld to be formed in a manner that requires minimal post-weld machining. It is also beneficial for a weld to be formed in a manner that does not introduce excessive stresses.

Overall, a SWA should be able to withstand temperature variations and centrifugal loading without experiencing significant deformation (e.g., which could alter balance, introduce noise, reduce assembly life, etc.). As described herein, various components, assemblies and techniques can improve SWA quality and turbocharger performance.

### BRIEF DESCRIPTION OF THE DRAWINGS

A more complete understanding of the various methods, devices, assemblies, systems, arrangements, etc., described herein, and equivalents thereof, may be had by reference to the following detailed description when taken in conjunction with examples shown in the accompanying drawings where:

Fig. 1 is a diagram of a turbocharger and an internal combustion engine;

Fig. 2 is a cross-sectional view of a turbocharger;

Fig. 3 is a side view of an example of a SWA;

Fig. 4 is a cross-sectional view of an example of a SWA;

Fig. 5 is a black and white line drawing based on a photograph exhibiting characteristics associated with a conventional SWA joint;

Fig. 6 is a black and white line drawing based on a photograph exhibiting characteristics of an example of a SWA joint;

Fig. 7 is a side view of an example of a shaft component and a cross-sectional view of an example of a turbine wheel component that may be joined to form a SWA;

Fig. 8 is a side view of an example of a SWA formed using the components shown in Fig. 7;

Fig. 9 is a side view of an example of a SWA where a turbine wheel component includes a groove configured to seat a seal component; and

Fig. 10 is a diagram of an example of a method for forming a SWA.

### DETAILED DESCRIPTION

Various shaft and turbine wheel assemblies (SWAs) are described herein where a joint between a shaft and a turbine wheel is formed along a groove configured to receive a seal component such as a piston ring. In various examples, a joint can be a weld joint, which when compared to a conventional SWA weld joint, exhibits lesser area. As described herein, reduction of weld area can reduce compressive stress associated with shrinkage of material after solidification of a melted weld bath. In various examples, a joint can be located at a greater distance from a turbine wheel backdisk when compared to a conventional SWA joint. As described herein, during operation, thermo-mechanical stresses are predicted to be less important when a weld joint is moved in a direction away from a turbine wheel backdisk. In various examples, a weld joint is located in a seal component groove, which allows for reduction of weld area and for placement of the weld joint in a direction away from a turbine wheel backdisk. As described herein, an axial shift of a weld joint away from a backdisk, even a few millimeters, can improve SWA performance. Various technologies described herein can act to minimize SWA unbalance evolution during lifetime of a SWA. Gas stand trials on various example SWAs exhibited reduced static unbalance compared to a conventional SWA.

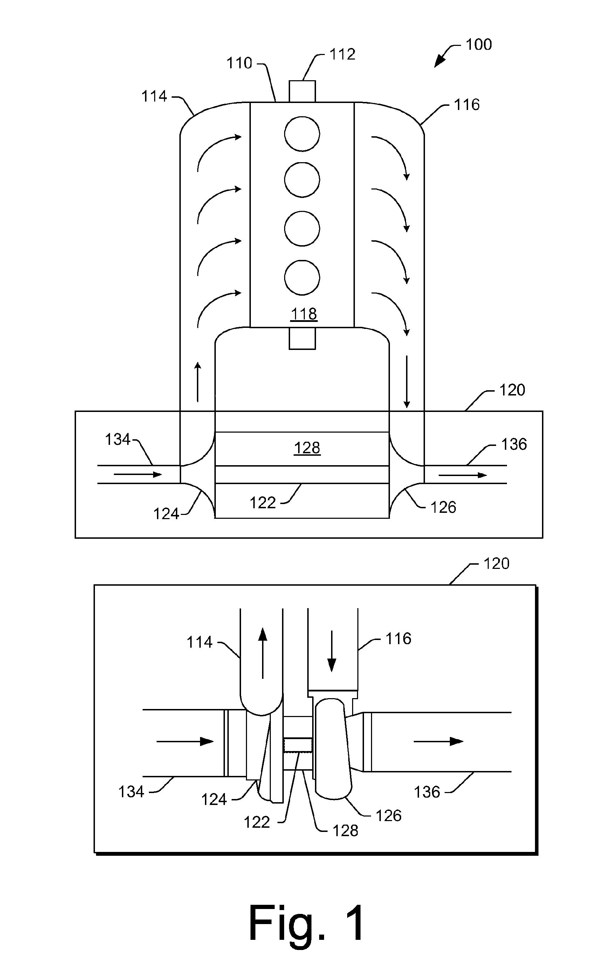

Turbochargers are frequently utilized to increase output of an internal combustion engine. Referring to Fig. 1, a conventional system 100 includes an internal combustion engine 110 and a turbocharger 120. The internal combustion engine 110 includes an engine block 118 housing one or more combustion chambers that operatively drive a shaft 112. As shown in Fig. 1, an intake port 114 provides a flow path for air to the engine block 118 while an exhaust port 116 provides a flow path for exhaust from the engine block 118.

The turbocharger 120 acts to extract energy from the exhaust and to provide energy to intake air, which may be combined with fuel to form combustion gas. As shown in Fig. 1, the turbocharger 120 includes an air inlet 134, a shaft 122, a compressor assembly 124 (e.g., including a compressor wheel, a compressor housing, etc.), a turbine assembly 126 (e.g., including a turbine wheel, a turbine housing, etc.), a housing 128 and an exhaust outlet 136. The housing 128 may be referred to as a center housing as it is disposed between a compressor wheel of the compressor assembly 124 and a turbine wheel of the turbine assembly 126. The shaft 122 may be joined to a turbine wheel of the turbine assembly 126, for example, via a weld joint.

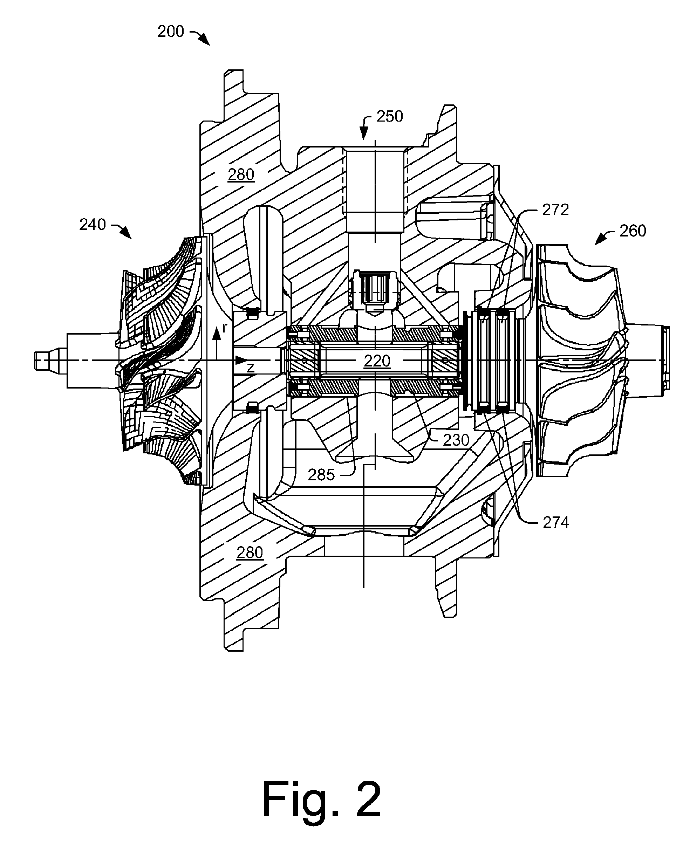

Fig. 2 shows a cross-sectional view of a turbocharger 200 with respect to a radial coordinate r and an axial coordinate z. The turbocharger 200 includes a shaft 220 supported by a bearing 230 positioned in a bore 285 of a center housing 280. In the example of Fig. 2, the shaft 220 and a turbine wheel 260 are joined to form a SWA. The shaft 220 extends through the bore 285 of the center housing 280 to receive a compressor wheel 240 such that the shaft 220 may be characterized by a compressor end and a turbine end.

As shown in the example of Fig. 2, the SWA includes grooves 272 where each groove is configured to receive a respective seal component 274, which may be a piston ring or other type of seal component. The turbocharger 200 includes lubricant passages 250 for supply of lubricant to at least the shaft 220 as supported by the bearing 230. In such a configuration, on one side, the grooves 272 and the seal components 274 act to impede flow of lubricant outwardly toward the turbine wheel 260 and, on an opposing side, the grooves 272 and the seal components 274 act to impede flow of exhaust inwardly toward the bearing 230.

As mentioned, turbocharger temperature variations and centrifugal loading can affect a SWA, particularly at a joint that joins a shaft to a turbine wheel. For example, where a weld stresses material at or around the weld, temperature variations, centrifugal loading and other forces may causes such stresses to deform a SWA, which can alter balance.

During turbocharger manufacture, balancing typically occurs for one or more individual components, one or more component assemblies (e.g., a SWA) or a combination of both. For example, consider a center housing rotating assembly (CHRA) that includes a SWA and a compressor wheel supported in a center housing by a bearing. In such an example, component balancing of the SWA and the compressor wheel may occur followed by assembly of the CHRA and assembly balancing of the CHRA.

With respect to commercially available balancing units for turbocharger assemblies, the company Schenck RoTec GmbH (Darmstadt, Germany) markets various balancing machines for turbocharger core assemblies (e.g., horizontal balancing machines such as MBRS series). Such balancing machines operate at low-speed for acquiring dynamic unbalance measurements of a turbocharger core assembly, for example, prior to high-speed balancing of a core assembly.

Balancing can be time consuming and add considerable cost. Where a risk exists for deformation of a SWA in an installed turbocharger, benefits achieved by balancing are likely to be diminished. Accordingly, as described herein, various example SWAs aim to have reduced deformation risk. In such examples, reduced deformation risk can be achieved, at least in part, by reduction of joint area when compared to a conventional SWA joint. Various examples described herein include a joint aligned with a groove configured to seat a seal component. In such examples, the joint extends to a radial dimension approximately equal to the radial dimension of the bottom of a groove. In contrast, conventional SWAs usually locate a joint at an axial position where the joint extends to a maximum radial dimension of a shaft.

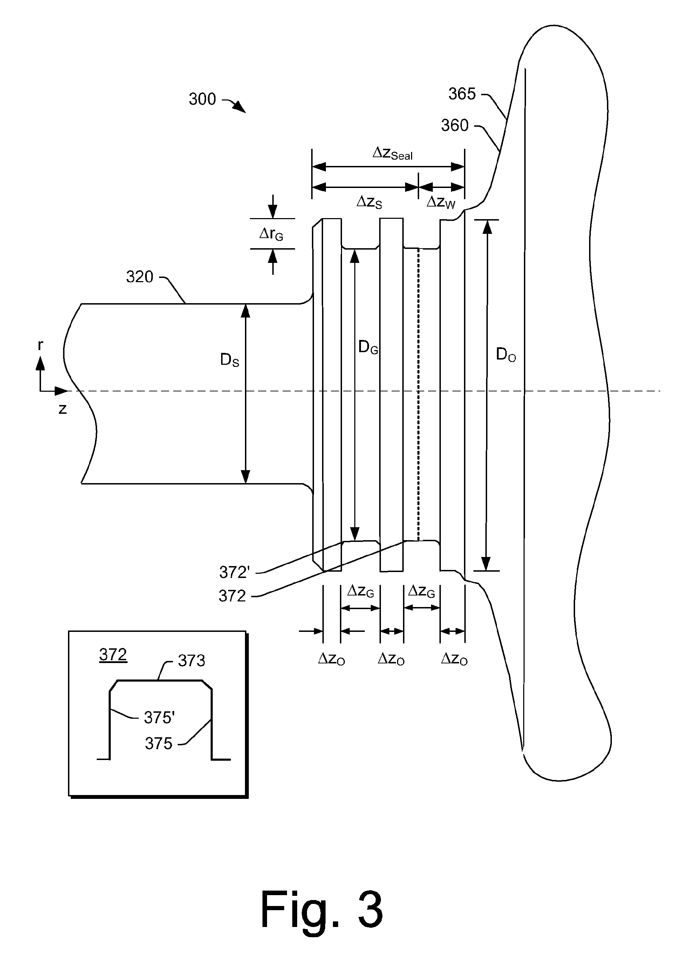

Fig. 3 shows an example of a SWA 300 that includes a joint between a shaft 320 and a turbine wheel 360 that coincides with a groove 372. An enlarged view of the groove 372 shows a groove base 373 and groove walls 375 and 375'. In the example of Fig. 3, the shaft 320 includes a shaft diameter (Dₛ), an outer diameter (Do) associated with a seal portion of the SWA 300 (see, e.g., ΔZ_{Seal}) and a groove diameter (D_{G}) (see, e.g., groove base 373). The difference between Do and D_{G} defines a groove depth (see, e.g., groove radial depth Δr_{G}). In the example of Fig. 3, the turbine wheel 360 includes a backdisk surface 365, an outer diameter (Do) and a groove diameter (D_{G}).

As shown in Fig. 3, the groove 372 is formed in part by the shaft 320 and in part by the turbine wheel 360 and includes an axial groove width ΔZ_{G} , as defined by the groove walls 375 and 375', and a radial groove depth Δr_{G}, as defined by the groove base 373. Another groove 372' is formed in the shaft 320 and offset axially from the groove 372 by a distance Δzₒ. As to the seal portion of the SWA 300 (see, e.g., ΔZ_{Seal}), the axial length of the shaft portion is represented by dimension Δzₛ while the axial length of the turbine wheel portion is represented by dimension Δz_{w}. In the example of Fig. 3, the turbine wheel portion includes a sloped shoulder of increasing diameter (see, e.g., turbine wheel side of length Δz_{w}) and the shaft wheel portion includes a sloped shoulder of decreasing diameter (see, e.g., shaft side of length Δzₛ). In the example of Fig. 3, the SWA 300 may have a welded joint area about 50% less than a conventional SWA. In the example of Fig. 3, the weld joint is located approximately in the middle of the groove and allows for both reducing welding section and moving it several millimeters away from the backdisk surface 365 of the turbine wheel 360.

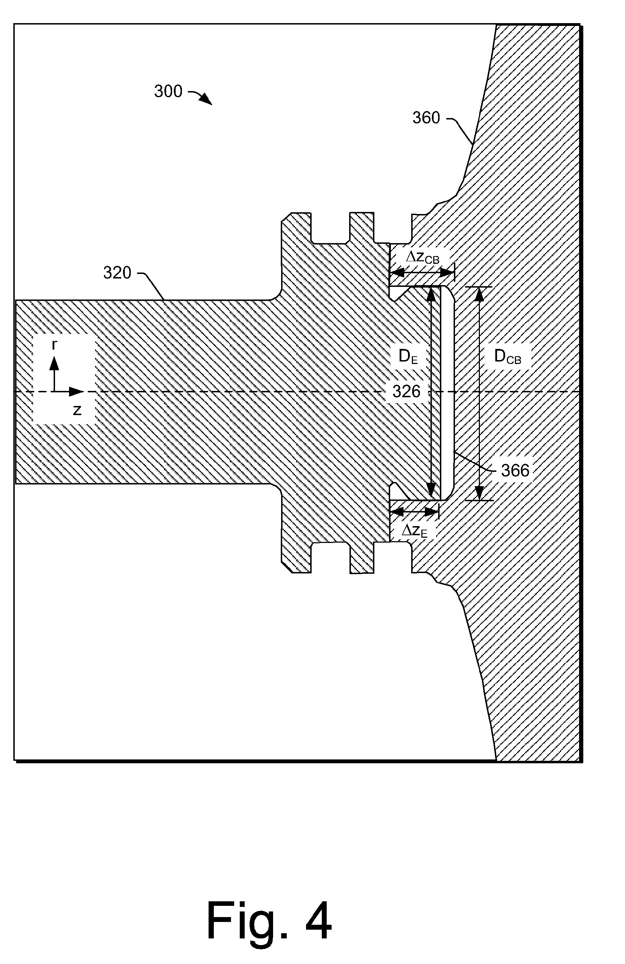

Fig. 4 shows a cross-sectional view of, for example, the SWA 300. In the example of Fig. 4, the shaft 320 includes an extension 326 and the turbine wheel 360 includes a counter bore 366. The extension 326 includes an extension diameter (D_{E}) and an extension length (ΔZ_{E}) while the counter bore 366 includes a counter bore diameter (D_{CB}) and a counter bore length (Δz_{CB}). In the example of Fig. 4, D_{E} is approximately equal to D_{CB}. As described herein, the extension 326 may be inserted in the counter bore 366. Thereafter, a joining process may permanently join the shaft 320 and the turbine wheel 360. Such a process may be a welding process. While the example of Fig. 4 shows a shaft as including an extension and a turbine wheel as including a counter bore, in an alternative arrangement, a turbine wheel may include an extension and a shaft may include a counter bore.

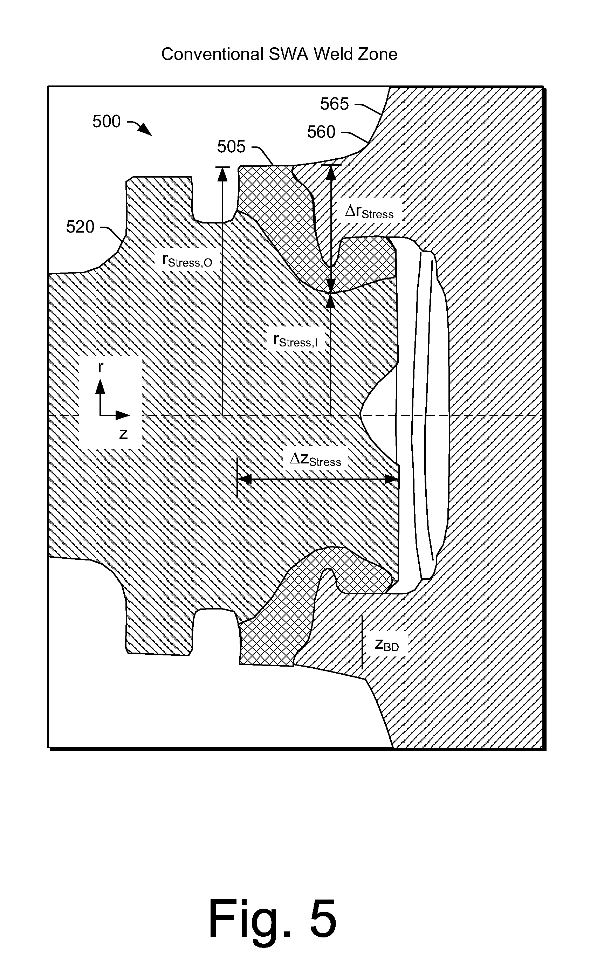

Fig. 5 shows a drawing of a conventional SWA weld zone based on a photograph exhibiting characteristics associated with a conventional SWA joint. Specifically, a SWA 500 includes a shaft 520 and a turbine wheel 560 joined at a weld joint formed via an electron beam welding process. The SWA 500 was cut in half and photographed using a technique to exhibit material stresses, represented as weld zone 505. As shown in Fig. 5, deformation occurs during electron beam welding, which imparts material stresses. The stresses extend at least through the zone 505, which has an axial length (Δz_{Stress}), an innermost radius (r_{Stress,l}), an outermost radius (rₛₜᵣₑₛₛ,ₒ) and a radial height (Δr_{Stress}). In three-dimensions, the stressed material region or weld zone 505 occupies a volume. This volume and its corresponding surfaces may be affected by temperature variations and by centrifugal forces. Such forces may deform the positional relationship between the shaft 520 and the turbine wheel 560 and, in turn, alter balance of the SWA 500.

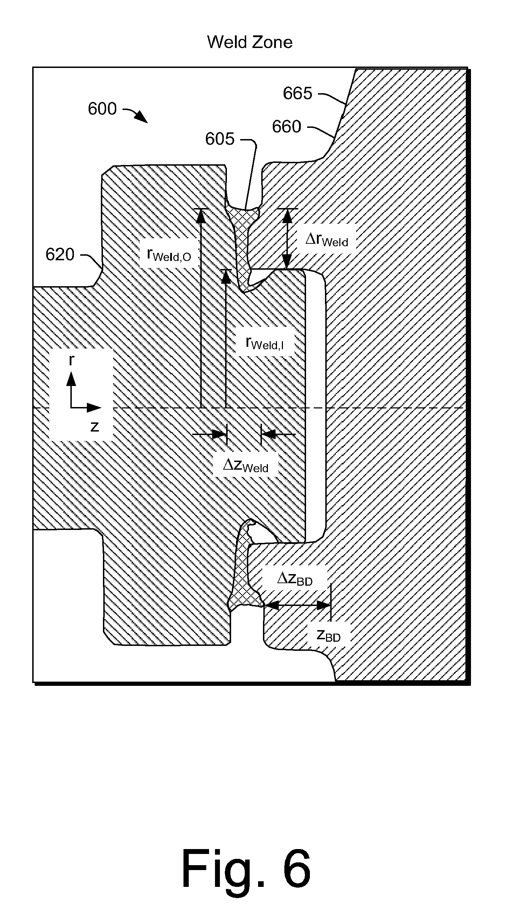

Fig. 6 shows a drawing of an example of a SWA weld zone based on a photograph exhibiting characteristics associated with a SWA joint associated with a groove. Specifically, a SWA 600 includes a shaft 620 and a turbine wheel 660 joined at a weld joint formed via an electron beam welding process. The SWA 600 was cut in half and photographed to reveal a weld zone 605. As shown in Fig. 6, the weld zone 605 includes an axial length (ΔZ_{Weld}), an inner radius (r_{Weld},ₗ), an outer radius (r_{Weld},_{O}) and a radial height (Δr_{Weld}). In three-dimensions, the weld zone 605 occupies a volume. This volume and its corresponding surface area are less than the volume and surface area of the conventional weld shown in Fig. 5. Further, the weld zone 605 is located at a distance (Δz_{BD}) from a backdisk 665 of the turbine wheel 660. In Fig. 5, the stress zone 505 extends axially to a backdisk 565 of the turbine wheel 560 (see, e.g., dimension z_{BD}). Various SWA features of the example of Fig. 6 can act to reduce risk of deformation due to temperature variations, centrifugal forces, etc. Accordingly, the SWA 600 of Fig. 6 can maintain balance more readily than the SWA 500 of Fig. 5. As mentioned, gas stand trials demonstrated reduced static unbalance for various example SWAs compared to a convention SWA. As described herein, a reduction in unbalance improves SWA quality, which can improve performance, extend component and turbocharger life and reduce operational noise. Specifically, by reducing thermal and mechanical stresses in a SWA (e.g., due to temperature variation and centrifugal loading), unbalance evolution during service can be reduced, which, in turn, can reduce occurrence of various turbocharger noise issues. While electron beam welding was used for the SWA 600, as described herein, welding may include one or more of electron beam welding, laser welding or other welding technique.

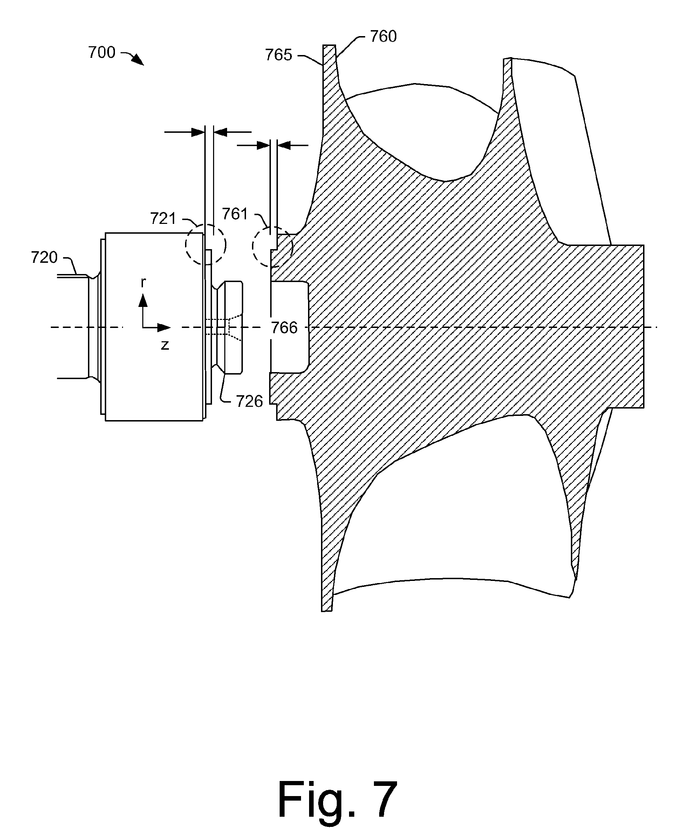

Fig. 7 shows an example of a SWA 700 with a shaft 720 and a turbine wheel 760. In the example of Fig. 7, the shaft 720 includes an extension 726 and the turbine wheel 760 includes a counter bore 766 configured for receipt of at least part of the extension 726. Each of the shaft 720 and the turbine wheel 760 include features to form a groove displaced a distance from a backdisk surface 765 of the turbine wheel 760. In the example of Fig. 7, the shaft 720 includes features 721 to form at least part of a groove and the turbine wheel 760 includes features 761 to form at least part of a groove. The features may include a shoulder, an axial face, etc. For example, one component may include a shoulder while the other component includes an axial face, which when joined, form a groove. In another example, one component may include a shoulder and the other component may include a shoulder where the shoulders, when joined, form a groove. As described herein, the foregoing examples of arrangements of features and various other arrangements of features on one component and another component may be included in a SWA to form a groove.

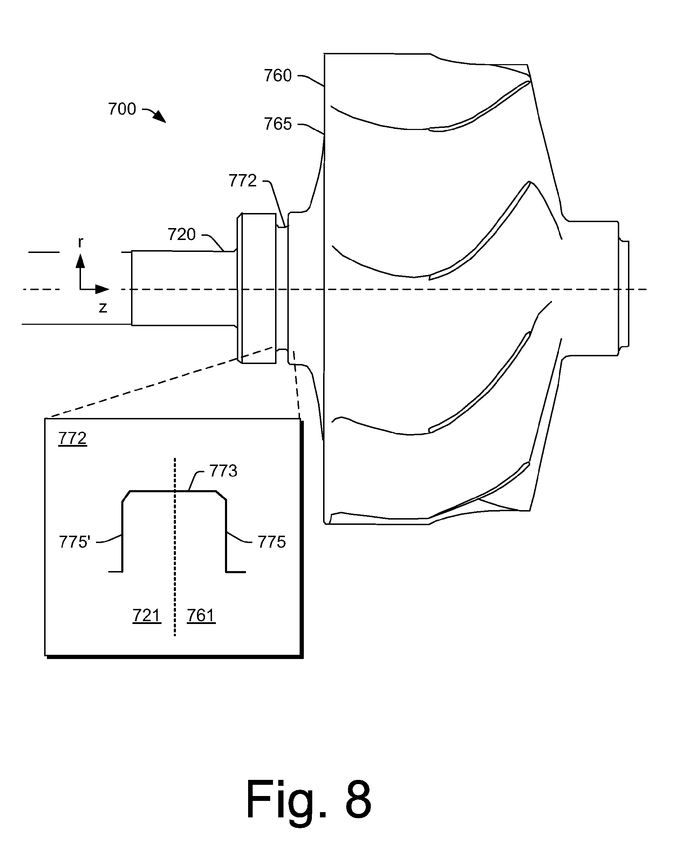

Fig. 8 shows the SWA 700 of Fig. 7 with a groove 772 formed at a joint between the shaft 720 and the turbine wheel 760. Specifically, the features 721 and the features 761 form the groove 772 when the shaft 720 and turbine wheel 760 are joined. An enlarged view of the groove 772 shows approximately the features 721 of the shaft 720 and the features 761 of the turbine wheel which form the groove 772. The enlarged view includes labels for a groove base 773 and groove walls 775 and 775'.

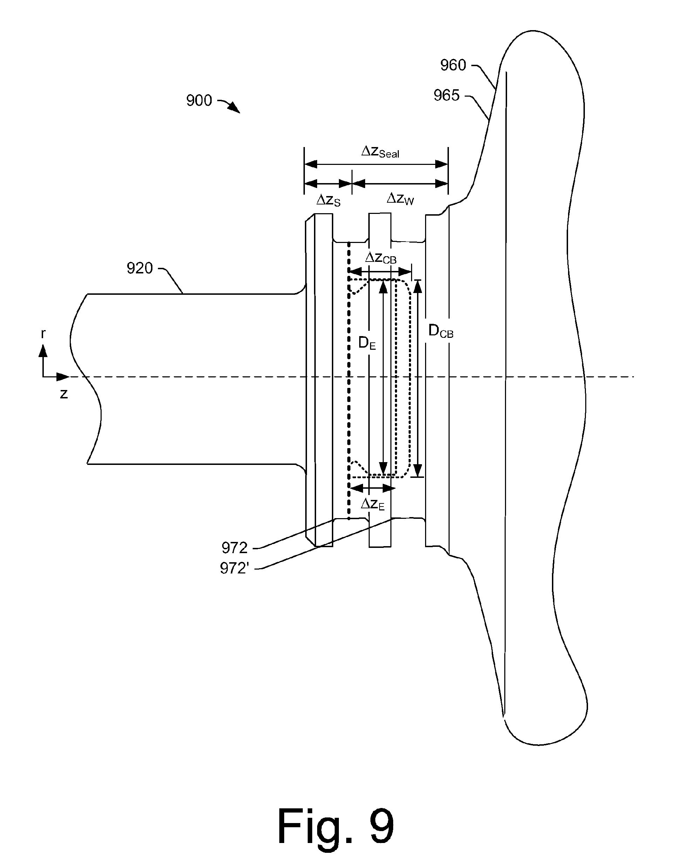

Fig. 9 shows an example of a SWA 900 that includes a shaft 920 and a turbine wheel 960. Various dimensions are shown, which may be understood more fully with reference to the SWA 300 of Fig. 3; noting, however, that in the example of Fig. 9, the turbine wheel 960 includes a groove 972' whereas in the example of Fig. 3, the shaft 320 includes a groove 372'. While each of these examples shows an inner groove 372' or 972 and an outer groove 372 or 972', as described herein, a SWA may include a single groove, two grooves or more than two grooves where at least one groove is formed at a joint.

As described herein, a SWA can include a shaft that includes an axial extension and a shaft-side groove portion, the shaft-side groove portion defined at least in part by a radial height; a turbine wheel that includes a counter bore and a turbine wheel-side groove portion, the turbine wheel-side groove portion defined at least in part by a radial height; and, upon receipt of the axial extension of the shaft by the counter bore of the turbine wheel, a groove formed by the shaft-side groove portion and the turbine wheel-side groove portion, the groove configured to seat a seal component. As described herein, an assembly may include one or more seal components. In general, a groove forms at least in part a tortuous path to impede flow of lubricant, exhaust or lubricant and exhaust.

As described herein, an assembly can include a weld joint that fixes a shaft to a turbine wheel where the weld joint is disposed axially at least in part between an axial position of the shaft-side groove portion and an axial position of the turbine wheel-side groove portion.

As described herein, an assembly for a turbocharger can include a shaft, a turbine wheel, a groove configured to seat a seal component where the groove includes a groove base disposed at an inner radius and a welded joint extending to the groove base. In such an assembly, the groove can include a groove wall formed by the shaft and a groove wall formed by the turbine wheel. As described herein, a welded joint may be a joint formed by an electron beam welding process or a laser welding process.

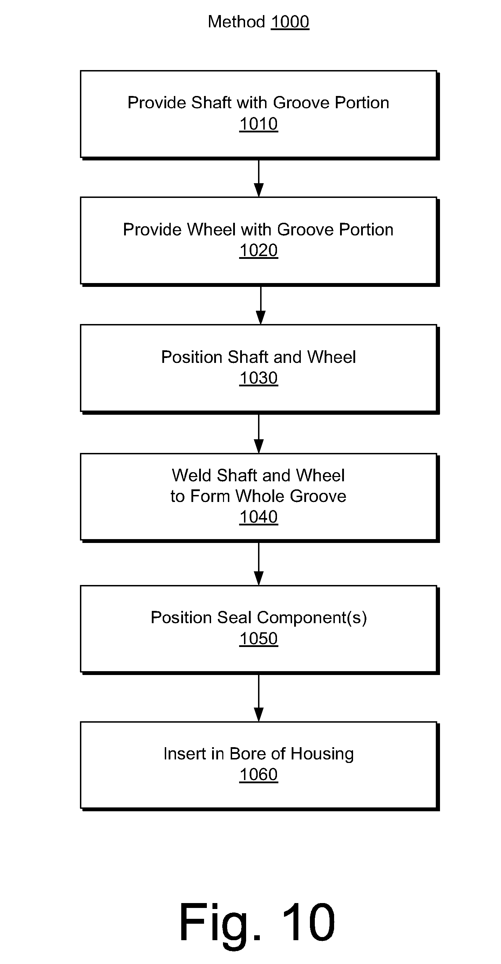

Fig. 10 shows an example of a method 1000. The method 1000 commences in a provision block 1010 that includes providing a shaft with a groove portion and a provision block 1020 that includes providing a turbine wheel with a groove portion. A position block 1030 includes positioning the shaft and the turbine wheel (e.g., to align the groove portions). A weld block 1040 includes welding the shaft and the wheel to form a shaft and turbine wheel assembly with a whole groove, the whole groove formed by the respective groove portions of the shaft and the turbine wheel. A position block 1050 includes positioning one or more seal components with respect to the groove (e.g., positioning a piston ring at least partially in the groove). As part of a turbocharger assembly process or optionally a balancing process, the method 1000 includes an insertion block 1060 that includes inserting the shaft and turbine wheel assembly with the one or more seal components into a bore of a housing. As described herein, one or more bearing components may be positioned with respect to the shaft of the shaft and turbine wheel assembly prior to inserting into a bore or, for example, for clamping the shaft and turbine wheel assembly in a balancing machine.

As described herein, a shaft and turbine wheel assembly (SWA) with one or more seal components (e.g., at least one seal component seated in a groove formed by joining of a shaft and a turbine wheel) can be part of a turbocharger. A method can include operating such a turbocharger. Such a turbocharger may be may be suited for various operational temperature ranges. In some instances, a high temperature diesel engine may have an operational temperature range that overlaps with a gasoline engine. Typical diesel exhaust may vary from about 100 C at idle to about 500 C at high load. For a gasoline engine, exhaust temperature may, at an upper end, exceed 1000 C.

Although some examples of methods, devices, systems, arrangements, etc., have been illustrated in the accompanying Drawings and described in the foregoing Detailed Description, it will be understood that the example embodiments disclosed are not limiting, but are capable of numerous rearrangements, modifications and substitutions without departing from the spirit set forth and defined by the following claims.

## Claims

1. An assembly for a turbocharger comprising:
a shaft that comprises an axial extension and a shaft-side groove portion, the shaft-side groove portion defined at least in part by a radial height;
a turbine wheel that comprises a counter bore and a turbine wheel-side groove portion, the turbine wheel-side groove portion defined at least in part by a radial height; and
upon receipt of the axial extension of the shaft by the counter bore of the turbine wheel, a groove formed by the shaft-side groove portion and the turbine wheel-side groove portion, the groove configured to seat a seal component.

2. The assembly of claim 1 further comprising the seal component.

3. The assembly of claim 1 wherein the groove forms at least in part a tortuous path to impede flow of lubricant, exhaust or lubricant and exhaust.

4. The assembly of claim 1 further comprising a weld joint that fixes the shaft to the turbine wheel, the weld joint disposed axially at least in part between an axial position of the shaft-side groove portion and an axial position of the turbine wheel-side groove portion.

5. The assembly of claim 1 wherein each of the groove portions comprises an axial face.

6. The assembly of claim 1 wherein at least one of the groove portions comprises a shoulder.

7. The assembly of claim 1 wherein one of the groove portions comprises an axial face and a shoulder.

8. The assembly of claim 7 wherein the other groove portion comprises an axial face.

9. The assembly of claim 7 wherein the other groove portion comprises an axial face and a shoulder.

10. The assembly of claim 1 comprising at least two grooves.

11. The assembly of claim 10 wherein the shaft comprises a groove configured to seat a seal component.

12. The assembly of claim 10 wherein the turbine wheel comprises a groove configured to seat a seal component.

13. An assembly for a turbocharger comprising:
a shaft;
a turbine wheel;
a groove configured to seat a seal component wherein the groove comprises a groove base disposed at an inner radius; and
a welded joint extending to the groove base.

14. The assembly of claim 13 wherein the groove comprises a groove wall formed by the shaft and a groove wall formed by the turbine wheel.

15. The assembly of claim 13 wherein the welded joint comprises a joint formed by an electron beam welding process or a laser welding process.
